# DEMANDE DE BREVET EUROPEEN

(11) **EP 1 235 432 A1**
(43) Date de publication de la demande: **28.08.2002**
(21) Numéro de dépôt: 02075673.0
(22) Date de dépôt: 19.02.2002
(51) Int. Cl.: H04N 7/16

(54) **Système de réception de signaux cryptés multi-opérateurs à encombrement et coût réduits**

(30) Priorité: 27.02.2001 FR 0102664
(71) Demandeur: Koninklijke Philips Electronics N.V., 5621 BA Eindhoven (NL)
(72) Inventeur: Benoit, Hervé, 75008 Paris (FR)
(74) Mandataire: Chaffraix, Jean

(57) **Abrégé**

L'invention concerne un système destiné à recevoir des signaux de données DS encodés et cryptés, incluant:
. un décodeur DEC,
. un dispositif de sortie DISP muni de moyens pour produire des stimuli de sortie sur la base de signaux de sortie OS dudit décodeur,
. des moyens de décryptage DES des signaux de données DS, activés par un signal d'autorisation ES,
. des moyens d'autorisation EN, destinés à recevoir des informations sécurisées de la part d'un opérateur, et à fournir le signal d'autorisation ES.

L'invention permet à l'utilisateur de recevoir des programmes provenant de différents opérateurs, sans augmenter de manière prohibitive le coût et l'encombrement du système, ni les risques de contrefaçon du contenu desdits programmes.

Application : Récepteurs de programmes de télévision numériques.

## Description

La présente invention concerne un système destiné à opérer une réception de signaux de données encodés et cryptés, et un traitement desdits signaux afin de les convertir en stimuli de sortie compréhensibles par un utilisateur dudit système.

De tels systèmes sont couramment utilisés dans l'industrie électronique pour, entre autres, capter et visualiser des programmes de télévision numérique. Les systèmes actuels incluent généralement :
. un décodeur,
. des moyens de décryptage, et
. un dispositif de sortie, par exemple un téléviseur ou un moniteur, pour produire les stimuli de sortie, en l'occurrence des images et des sons, sur la base de signaux de sortie du décodeur.

Dans l'état actuel du marché des programmes de télévision numérique, formés par des ensembles de signaux de données, et du matériel y afférent, lesdits programmes sont encodés selon des standards de compression de données audiovisuelles de type MPEG. Chaque émetteur de signaux de données, communément appelé opérateur, conçoit un décodeur spécifiquement étudié pour décrypter et décoder, c'est-à-dire décompresser, ses propres programmes, ce qui entraîne que le décodeur est contenu dans un boîtier dans lequel sont le plus souvent inclus les moyens de décryptage. Un tel décodeur est incapable de décrypter et par conséquent de décoder des programmes provenant d'un autre opérateur. Un utilisateur qui souhaite recevoir des programmes en provenance de plusieurs opérateurs différents devra donc se munir d'autant de boîtiers-décodeurs différents, ce qui engendre un coût et un encombrement importants du système multi-opérateurs ainsi créé.

L'un des buts de la présente invention est de permettre à un utilisateur de recevoir des programmes provenant de différents opérateurs, sans pour autant que le système utilisé à cet effet ne présente les inconvénients décrits ci-dessus.

En effet, selon l'invention, le décodeur et les moyens de décryptage inclus dans le système conforme au paragraphe introductif peuvent être incorporés dans le dispositif de sortie, le système comportant en outre des moyens d'autorisation, destinés à recevoir, de la part d'un émetteur de signaux de données, des informations sécurisées, et à fournir un signal d'autorisation consécutivement à la réception desdites informations, lequel signal d'autorisation est destiné à activer les moyens de décryptage.

Dans un tel système, les moyens de décryptage ne décryptent effectivement les signaux de données que lorsqu'ils y sont autorisés par l'émetteur desdits signaux, c'est-à-dire, le plus souvent, après que l'utilisateur du système aura conclu une transaction avec l'opérateur correspondant.
Plusieurs hypothèses de fonctionnement sont envisageables :
Les moyens de décryptage peuvent contenir un logiciel de décryptage standard pour tous les programmes susceptibles d'être reçus par le système, le décryptage de chaque programme n'étant possible que grâce à une clé spécifique à ce programme, définie par l'opérateur qui est l'émetteur dudit programme. Dans une telle hypothèse de fonctionnement, la clé pourra constituer le signal d'autorisation.
Dans cette hypothèse, des signaux de données décryptés seront disponibles en sortie des moyens de décryptage si ceux-ci sont inclus dans un module autonome, et risqueront d'être interceptés par un utilisateur mal intentionné aux fins de recopie illégale du contenu du programme décodé.
Il est donc souhaitable de prévoir des aménagements empêchant que l'utilisateur du système ne puisse avoir accès aux signaux décryptés.

A cet effet, les moyens de décryptage seront avantageusement inclus dans le décodeur.

Si, de surcroît, le décodeur est lui-même inclus dans le dispositif de sortie, les seules informations qui seront directement accessibles à l'utilisateur seront les informations sécurisées fournies par l'émetteur des signaux de données, ce qui limite les risques de contrefaçon du contenu des programmes reçus par le système.

Dans une autre hypothèse de fonctionnement, les moyens de décryptage peuvent contenir des moyens matériels pour exécuter un logiciel de décryptage, sans pour autant contenir le logiciel lui-même, auquel cas le dit logiciel sera acheminé, au moyen du signal d'autorisation, vers les moyens de décryptage où il sera mémorisé. Un tel acheminement sera assujetti à la réception par les moyens d'autorisation des informations sécurisées, qui pourront contenir un code définissant le logiciel de décryptage. Dans cette autre hypothèse, on pourra prévoir d'incorporer les moyens d'autorisation au décodeur, intégré ou non dans le dispositif de sortie, ce qui empêchera que le logiciel de décryptage ne soit directement accessible à l'utilisateur du système, et limitera les risques de contrefaçon du contenu des programmes.
Un tel mode de réalisation de l'invention permet en outre de réduire encore l'encombrement du système.

Selon un mode de réalisation particulier de l'invention, le décodeur est muni d'une interface pour permettre des échanges de données avec des appareils périphériques au dispositif de sortie, le signal d'autorisation étant destiné à être acheminé depuis les moyens d'autorisation vers les moyens de décryptage via ladite interface.

Un tel mode de réalisation tire parti du fait que la plupart des décodeurs devront, dans un proche avenir, être munis d'une interface standard, par exemple du type USB, et permettra donc d'utiliser des ressources préexistantes pour l'acheminement du signal d'autorisation.

Selon un mode de mise en oeuvre de l'invention, les moyens d'autorisation contiennent une mémoire dans laquelle sont stockées les informations sécurisées.

Dans ce mode de mise en oeuvre, chaque opérateur doit fournir les moyens d'autorisation qui lui sont spécifiques, destinés à être connectés au dispositif de sortie. L'encombrement résultant pour le système est cependant moins important que dans les systèmes multi-opérateurs connus, les moyens d'autorisation qui seront ici essentiellement constitués par une mémoire et un connecteur associé, étant moins volumineux qu'un boîtier-décodeur.

Dans un autre mode de mise en oeuvre de l'invention, les moyens d'autorisation incluent un lecteur de support mémoire amovible, les informations sécurisées étant destinées à être stockées dans la mémoire dudit support.

Ce mode de mise en oeuvre permet de limiter encore l'encombrement et le coût du système, puisqu'un seul lecteur est nécessaire, l'adaptation du système aux contraintes d'un nouvel opérateur se faisant par simple changement de support mémoire amovible.
On pourra en outre munir les moyens d'autorisation d'une pluralité de connecteurs, chacun destiné à recevoir un support mémoire amovible fourni par un opérateur.

Les supports mémoire amovibles peuvent revêtir différentes formes, et seront avantageusement constitués par des bâtonnets mémoire ou des cartes à puce.

Une variante de l'invention, selon laquelle les moyens d'autorisation sont munis d'un modem permettant d'établir un échange de données en temps réel entre le système et un émetteur de signaux de données, est avantageuse en ce qu'elle autorise, outre un téléchargement des informations sécurisées par l'opérateur émetteur des signaux de données, une communication bidirectionnelle entre l'utilisateur et différents opérateurs, qui permettra par exemple des transactions, notamment dans des applications de télévision à péage ou de téléachat.

Bien que le système décrit jusqu'à présent soit un système de télévision, l'invention n'est en aucun cas limitée à cette seule application. L'invention pourra par exemple être utilisée dans le cadre de la réception conditionnelle de programmes radiophoniques, ou encore dans celui de télécommunications sécurisées, où les stimuli de sortie seront exclusivement sonores.

Dans un de ses modes de mise en oeuvre, l'invention concerne également un procédé pour décrypter et décoder des signaux de données au sein d'un système destiné à convertir lesdits signaux en stimuli de sortie compréhensibles par un utilisateur dudit système, procédé incluant une étape d'acheminement d'un logiciel de décryptage, vers des moyens de décryptage contenant des moyens matériels pour exécuter ledit logiciel, depuis des moyens d'autorisation destinés à recevoir des informations sécurisées de la part d'un émetteur des signaux de données.

L'invention sera mieux comprise à l'aide de la description suivante, faite à titre d'exemple non-limitatif et en regard des dessins annexés, dans lesquels :
- la figure 1 est un schéma fonctionnel décrivant un système de réception conforme à un mode de mise en oeuvre de l'invention, et
- la figure 2 est un schéma fonctionnel décrivant un système de réception conforme à une variante particulièrement avantageuse de ce mode de mise en oeuvre de l'invention.

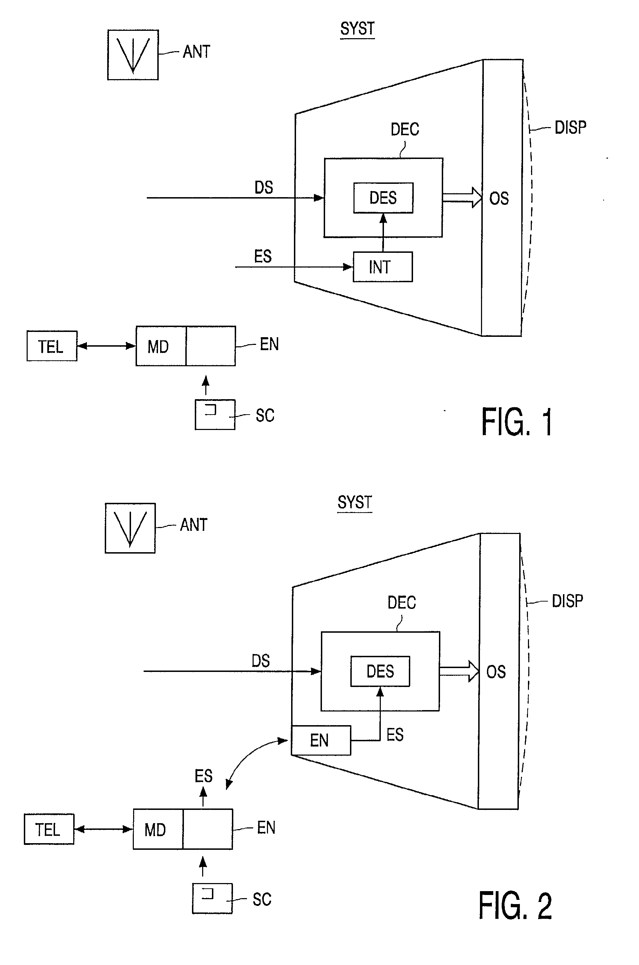

La figure 1 représente schématiquement un système SYST destiné à recevoir, depuis une antenne ANT, des signaux de données DS encodés et cryptés, et à opérer un traitement desdits signaux DS afin de les convertir en stimuli de sortie compréhensibles par un utilisateur dudit système SYST, incluant :
. un dispositif de sortie DISP, incluant un décodeur DEC des signaux de données DS, et muni de moyens pour produire les stimuli de sortie sur la base de signaux de sortie OS du décodeur DEC,
. des moyens de décryptage DES pour décrypter les signaux de données DES, lesdits moyens étant inclus dans le dispositif de sortie DISP et destinés à être activés par un signal d'autorisation ES,
. des moyens d'autorisation EN, destinés à recevoir des informations sécurisées de la part d'un émetteur des signaux de données, et à fournir le signal d'autorisation ES consécutivement à la réception desdites informations.

Dans l'exemple décrit ici, le dispositif de sortie est muni de moyens d'affichage, comme par exemple un tube cathodique, ou encore un écran à cristaux liquides ou à plasma, les stimuli de sortie étant des images et des sons. Les signaux de sortie OS du décodeur DEC seront utilisés pour piloter lesdits moyens d'affichage.
Dans un tel système, les moyens de décryptage DES ne décryptent effectivement les signaux de données DS que lorsqu'ils y sont autorisés par l'émetteur desdits signaux, c'est-à-dire, le plus souvent, après que l'utilisateur du système SYST aura conclu une transaction avec l'opérateur correspondant, qui aura alors livré à l'utilisateur les informations sécurisées.
Les moyens de décryptage DES peuvent contenir un logiciel de décryptage standard pour tous les programmes susceptibles d'être reçus par le système SYST, le décryptage de chaque programme n'étant possible que grâce à une clé spécifique à ce programme, définie par l'opérateur qui est l'émetteur dudit programme. Dans une telle hypothèse, la clé pourra être contenue dans les informations sécurisées et constituer le signal d'autorisation ES.
Dans une autre hypothèse, les moyens de décryptage DES peuvent contenir des moyens matériels pour exécuter un logiciel de décryptage, sans pour autant contenir le logiciel lui-même, auquel cas le dit logiciel sera acheminé, au moyen du signal d'autorisation ES, vers les moyens de décryptage DES où il sera mémorisé. Un tel acheminement sera assujetti à la réception des informations sécurisées par les moyens d'autorisation EN.
Ces informations sécurisées pourront contenir un code définissant le logiciel de décryptage. Selon le mode de réalisation particulier de l'invention décrit ici, les moyens de décryptage DES sont inclus dans le décodeur DEC, qui est muni d'une interface INT pour permettre des échanges de données avec des appareils périphériques au dispositif de sortie DISP, le signal d'autorisation ES étant destiné à être acheminé depuis les moyens d'autorisation EN vers les moyens de décryptage DES via ladite interface INT.
Ce mode de réalisation tire parti du fait que la plupart des décodeurs devront, dans un proche avenir, être munis d'une interface standard, par exemple du type USB ou IEEE1394, et permettra donc d'utiliser des ressources préexistantes pour l'acheminement du signal d'autorisation ES.
Les moyens d'autorisation EN incluent ainsi un lecteur de carte à puce SC, ladite carte étant fournie par un opérateur après que l'utilisateur du système SYST ait conclu une transaction avec ledit opérateur, ladite carte SC étant porteuse d'une mémoire dans laquelle les informations sécurisées sont destinées à être stockées.
Ainsi, lorsque l'utilisateur souhaitera accéder à des programmes d'un nouvel opérateur, il lui suffira d'insérer une nouvelle carte à puce correspondante dans les moyens d'autorisation EN. Il apparaît clairement que l'invention permet une réduction considérable de l'encombrement et du coût du système SYST, puisque, dans l'état actuel de la technique, un utilisateur qui souhaite recevoir des programmes en provenance de plusieurs opérateurs différents doit se munir d'autant de boîtiers-décodeurs différents, l'invention ne nécessitant à cet effet, dans l'exemple décrit ici, qu'un seul lecteur de carte à puce et un jeu de cartes à puces fournies par lesdits opérateurs.
Dans le système SYST décrit par la présente figure, les moyens d'autorisation EN sont munis d'un modem MD permettant d'établir, via une ligne téléphonique TEL, un échange de données en temps réel entre le système SYST et un émetteur de signaux de données. Cette variante de l'invention est avantageuse en ce qu'elle autorise un téléchargement d'informations sécurisées par un opérateur, par exemple à des fins de mise à jour, mais aussi une communication bidirectionnelle entre l'utilisateur et différents opérateurs, qui permettra par exemple des transactions, notamment dans des applications de télévision à péage ou de téléachat.

La figure 2 représente schématiquement une variante du système SYST décrit ci-dessus. Les éléments communs avec la figure précédente sont munis des mêmes signes de référence, et ne seront pas à nouveau décrits ici. Selon la présente variante, les moyens d'autorisation EN sont incorporés dans le dispositif de sortie DISP, lequel présente alors un connecteur destiné à recevoir le support contenant les informations sécurisées, par exemple une carte à puce SC, et un connecteur destiné à relier le modem MD avec une ligne téléphonique TEL.
Cette variante permet de limiter encore l'encombrement du système SYST, et présente en outre l'avantage suivant:
Dans l'hypothèse où le logiciel de décryptage est acheminé depuis les moyens d'autorisation EN vers les moyens de décryptage DES via le signal d'autorisation ES, ledit logiciel est pleinement opérationnel et risque d'être intercepté par un utilisateur mal intentionné aux fins de recopie illégale du contenu du programme décodé.
La variante de l'invention décrite ici empêche que l'utilisateur du système SYST ne puisse avoir directement accès au logiciel de décryptage. Du fait que les moyens d'autorisation EN sont inclus dans le dispositif de sortie DISP, les seules informations qui seront directement accessibles à l'utilisateur depuis l'extérieur dudit dispositif seront les informations sécurisées fournies par l'émetteur des signaux de données, ce qui limite les risques de contrefaçon du contenu des programmes reçus par le système.
En vue de limiter le coût du dispositif de sortie DISP, et de permettre des remplacements du modem MD par des versions améliorées tout au long de la durée de vie du dispositif de sortie DISP, on pourra choisir de dissocier des moyens d'autorisation EN le modem MD, qui constituera alors un appareil périphérique externe audit dispositif DISP.

## Revendications

1. Système destiné à opérer une réception de signaux de données encodés et cryptés, et un traitement desdits signaux afin de les convertir en stimuli de sortie compréhensibles par un utilisateur dudit système, comportant :
. un décodeur des signaux de données,
. un dispositif de sortie muni de moyens pour produire les stimuli de sortie sur la base de signaux de sortie du décodeur,
. des moyens de décryptage pour décrypter les signaux de données, lesdits moyens étant destinés à être activés par un signal d'autorisation,
. des moyens d'autorisation, destinés à recevoir des informations sécurisées de la part d'un émetteur des signaux de données, et à fournir le signal d'autorisation consécutivement à la réception desdites informations,
système dans lequel les moyens de décryptage contiennent des moyens matériels pour exécuter un programme d'accès conditionnel contrôlant le décryptage desdits signaux, lequel programme étant destiné à être acheminé vers les moyens de décryptage au moyen du signal d'autorisation.

2. Système selon la revendication 1, dans lequel les moyens de décryptage sont inclus dans le décodeur.

3. Système selon la revendication 1, dans lequel les moyens de décryptage sont inclus dans le décodeur.

4. Système selon la revendication 1, dans lequel le décodeur est incorporé au dispositif de sortie.

5. Système selon la revendication 3, dans lequel le décodeur est muni d'une interface pour permettre des échanges de données avec des appareils périphériques, et dans lequel le programme d'accès conditionnel contrôlant le décryptage est destiné à être acheminé depuis les moyens d'autorisation vers les moyens de décryptage via ladite interface au moyen du signal d'autorisation.

6. Système selon la revendication 1, dans lequel les moyens d'autorisation contiennent une mémoire dans laquelle sont stockées les informations sécurisées comportant le programme d'accès conditionnel contrôlant le décryptage.

7. Système selon la revendication 1, dans lequel les moyens d'autorisation incluent un lecteur de support mémoire amovible, les informations sécurisées étant destinées à être stockées dans la mémoire dudit support.

8. Système selon la revendication 8, dans lequel le support mémoire amovible est une carte à puce.

9. Système selon la revendication 1, dans lequel les moyens d'autorisation sont munis d'un modem permettant d'établir un échange de données en temps réel entre le système et un émetteur de signaux de données.

10. Procédé pour décrypter et décoder des signaux de données au sein d'un dispositif destiné à convertir lesdits signaux en stimuli de sortie compréhensibles par un utilisateur dudit système, procédé incluant une étape d'acheminement d'un programme d'accès conditionnel contrôlant le décryptage vers des moyens de décryptage contenant des moyens matériels pour exécuter ledit logiciel , depuis des moyens d'autorisation destinés à recevoir des informations sécurisées de la part d'un émetteur de signaux de données.
